# EUROPÄISCHE PATENTANMELDUNG

(11) **EP 1 818 533 A2**
(43) Veröffentlichungstag der Anmeldung: **15.08.2007**
(21) Anmeldenummer: 07100649.8
(22) Anmeldetag: 17.01.2007
(51) Int. Cl.: F02M 25/08, F02M 35/10

(54) **Sicherungssytem für eine Kohlenwasserstofffalle**

(30) Priorität: 08.02.2006 US 771012 P
(71) Anmelder: MANN+HUMMEL GmbH, 71638 Ludwigsburg (DE)
(72) Erfinder: Braithwaite, Alex, Climax MI Michigan 49034 (US); Willig, Michael, Santiago de Querétaro 76220 (US); Pfeiffer, Franz, 71297 Mönsheim (DE); Maier, Stefan, 74354 Besigheim (DE)

(57) **Zusammenfassung**

Ein Sicherungssystem sichert eine Kohlenwasserstofffalle (40) in einem Luftansaugweg eines Verbrennungsmotors. Die Kohlenwasserstofffalle (40) wird in einem ersten Luftrohr (20) untergebracht, wie zum Beispiel in einem Auslasskanal (22) eines Reinluftfilters (20). Ein zweites Luftrohr (32), wie zum Beispiel der Einlass eines Reinluftleitungssystems, wird über einen Teil des ersten Luftrohrs (20) geschoben, um die Kohlenwasserstofffalle (40) in dem ersten Luftrohr zu umschließen. Eine Klemme (50) wird sowohl über dem ersten als auch über dem zweiten Luftrohr angebracht. Eine Vielzahl von sich radial erstreckenden, in Umfangsrichtung beabstandeten Vorsprüngen (37), die auf einer inneren Oberfläche des zweiten Luftrohrs (32) ausgebildet sind, führen durch eine Vielzahl von Öffnungen (27), die in dem ersten Luftrohr ausgebildet sind und rasten unter dem von der Klemme (50) ausgeübten radialen Druck an einer äußeren Oberfläche der Kohlenwasserstofffalle (40) ein, wodurch die Falle in dem ersten Luftrohr sicher befestigt wird.

## Beschreibung

### 1. Bereich der Erfindung

Ein Sicherungssystem für eine Kohlenwasserstofffalle wird in einem Luftansaugsystem eines Kraftfahrzeugs eingebaut, um die Falle zu befestigen und die Kohlenwasserstoffemissionen zu verringern.

### 2. Beschreibung des technischen Gebiets

Die zunehmend strengeren Normen für Low Emission Vehicle (LEV) II zwingen die Autohersteller dazu, die Menge der Verdunstungsemissionen ihrer benzinbetriebenen Fahrzeuge drastisch zu. Bis 2007 müssen sämtliche benzinbetriebenen Fahrzeuge diese Normen für die Verdunstungsemissionen einhalten.

Verdunstungsemissionen sind Kohlenwasserstoffdämpfe, die nicht aus dem Abgassystem, sondern aus anderen Quellen in einem Kraftfahrzeug stammen. Die wesentlichsten Quellen derartiger Verdunstungsemissionen befinden sich im Luftansaugsystem, in der Kraftstoffverteilerleiste, im Abgasrückführungssystem und im Benzintank eines Kraftfahrzeugs.

Kohlenwasserstofffallen können zum Adsorbieren von Kohlenwasserstoffdämpfen und zur Verringerung von Kohlenwasserstoffemissionen verwendet werden. Üblicherweise beinhalten Kohlenwasserstofffallen Adsorptionsmittel wie Zeolithen oder Aktivkohle. Die Adsorptionsmittel können entweder in einem durchlässigen Trägermaterial oder Substrat enthalten oder darauf aufgetragen sein.

Kohlenwasserstofffallen können im Luftansaugsystem zwischen dem Luftfilter und dem Motor eines Fahrzeugs eingebaut werden, wo sie Kohlenwasserstoffdämpfe einfangen, die durch das Luftansaugsystem austreten. Der Einbau einer Kohlenwasserstofffalle an diesem Ort ist wünschenswert, weil man schätzt, dass das Luftansaugsystem für bis zu 50% der gesamten Verdunstungsemissionen verantwortlich ist.

Bei Gebrauch adsorbiert die Falle Kohlenwasserstoffdämpfe, die austreten, wenn der Motor stoppt. Wird das Fahrzeug gestartet und gefahren, gibt die Falle die Kohlenwasserstoffdämpfe in den Motor frei, wo sie verbrannt werden. Durch das Einfangen und spätere Verbrennen der Kohlenwasserstoffdämpfe können die Kohlenwasserstoffemissionen eines Fahrzeugs verringert werden.

Bevorzugte Kohlenwasserstofffallen sind so konstruiert, dass sie manipulationssicher sind und ohne On-Board-Diagnose-Gerät (OBD) auskommen. Kohlenwasserstofffallen bleiben vorzugsweise über die gesamte Lebensdauer des Fahrzeugs einsatzbereit, sie haben nur einen geringen Einfluss auf den Luftstrom in den Motor, und sie sind unempfindlich gegen Eis, Wasser, Salz, oder Staub.

Wie bereits oben angemerkt, beinhalten Kohlenwasserstofffallen üblicherweise Adsorptionsmittel, die auf durchlässiges Trägermaterial oder Substrat aufgetragen sind. Das üblicherweise aus Metall bestehende Substrat wird in ein Luftrohr, wie z. B. dem Auslasskanal des Luftfilters eines Fahrzeugs, eingebracht. Vorzugsweise wird das Substrat mittels einer Übergangspassung in den Auslasskanal eingebracht, um so zu verhindern, dass das Substrat vibriert. Vibrationen können unerwünschte Geräusche hervorrufen oder sogar die Falle beschädigen. Außerdem sorgt eine Übergangspassung im Auslasskanal dafür, dass ein Großteil der durch den Auslasskanal strömenden Gase durch die Kohlenwasserstofffalle (anstatt darum herum) geleitet wird, was wiederum ihre Effizienz erhöht. Durch die Kohlenwasserstofffalle strömende Gase werden durch die Reinluftleitung dem Motor zugeführt. Um den Luftfilter an die Reinluftleitung anzuschließen, wird ein Einlass der Reinluftleitung mit dem Auslasskanal des Luftfilters verbunden. Der Einlass der Reinluftleitung ist üblicherweise aus Gummi oder Kunststoff.

Die auf eine nicht sicher befestigte Klemme für die Kohlenwasserstofffalle wirkende thermische Beanspruchung kann unerwünschte Resultate zur Folge haben. Der üblicherweise aus Kunststoff hergestellte Auslasskanal eines Luftfilters und das Metallsubstrat sind Temperaturschwankungen unterworfen, die z. B. durch Umweltbedingungen oder Motor-Betriebsbedingungen hervorgerufen werden. Als eine Folge der jeweiligen Wärmeausdehnungskoeffizienten von Metall und Kunststoff und bei steigenden Temperaturen dehnt sich der Kunststoff üblicherweise stärker aus als das Metall. Weil die Ausmaße des Kunststoff-Auslasskanals sich stärker als die des Metallsubstrates ausdehnen, wird die Übergangspassung zwischen dem Auslasskanal und dem Substrat beeinträchtigt, was zu unerwünschten Geräuschen, adsorptivem Leistungsabfall und unter Umständen zu einem dauerhaften Schaden an der Falle führen kann.

Folglich wäre es von Vorteil, ein Sicherungssystem zur Verfügung zu stellen, welches es ermöglicht, eine Kohlenwasserstofffalle im Luftansaugsystem eines Fahrzeugs sicher anzubringen und dies insbesondere im Auslasskanal eines Luftfilters, um so die Auswirkungen eines Ungleichgewichts zwischen den Wärmeausdehnungskoeffizienten zu minimieren und die Verringerung von Kohlenwasserstoffemissionen zu optimieren.

### ZUSAMMENFASSUNG DER ERFINDUNG

Ziel dieser Erfindung ist es, eine verbesserte Anordnung für eine Kohlenwasserstofffalle für ein Kraftfahrzeug zur Verfügung zu stellen.

Ein anderes Ziel der Erfindung ist es, ein System zur Verfügung zu stellen, mit dem eine Kohlenwasserstofffalle im Luftansaugsystem eines Kraftfahrzeugs sicher befestigt wird.

Ein weiteres Ziel der Erfindung ist es, eine wirkungsvolle und sichere Kohlenwasserstofffalle zur Verfügung zu stellen, die in der Lage ist, Kohlenwasserstoffemissionen über die gesamte Lebensdauer eines Kraftfahrzeugs zu verringern.

Diese und weitere Vorteile werden gemäß der vorliegenden Erfindung erzielt, indem ein Sicherungssystem zur Verfügung gestellt wird, das in der Lage ist, eine Kohlenwasserstofffalle in einem Luftansaugweg eines Verbrennungsmotors sicher zu befestigen. Das Sicherungssystem beinhaltet ein erstes Luftrohr, das so ausgelegt ist, dass es eine Kohlenwasserstofffalle aufnehmen kann, ein zweites Luftrohr, das in der Lage ist, über die äußere Oberfläche des ersten Luftrohrs zu passen und dort einzurasten, und eine Klemme, die in der Lage ist, sowohl um das erste als auch um das zweite Luftrohr zu passen und so das erste Luftrohr an dem zweiten Luftrohr sicher zu befestigen.

Gemäß einer Ausführungsform beinhaltet das erste Luftrohr einen Auslasskanal eines Reinluftfilters und besteht aus Kunststoff. Gemäß einer weiteren Ausführungsform beinhaltet das zweite Luftrohr einen Einlassteil eines Reinluftleitungssystems und besteht aus Gummi. Die Kohlenwasserstofffalle wird vorzugsweise in das Luftansaugsystem eines Kraftfahrzeugs zwischen dem Luftfilter und dem Motor eingebaut.

Das erste und zweite Luftrohr sind speziell so konfiguriert, dass sie in Verbindung mit einer dauerhaften Klemme zum sicheren Befestigen der Kohlenwasserstofffalle betrieben werden. In einer äußeren Wandung des ersten Luftrohrs sind eine Vielzahl (z. B. drei, vier, fünf oder mehr) in Umfangsrichtung beabstandete Öffnungen ausgebildet. Die Öffnungen sind vorzugsweise in gleichmäßigen Abständen um den Umfang des ersten Luftrohrs angeordnet.

Eine innere Oberfläche des zweiten Luftrohrs beinhaltet eine gleiche Anzahl radial nach innen sich erstreckender, in Umfangsrichtung beabstandeter Vorsprünge. Während des Zusammenbaus des Sicherungssystems - wenn das zweite Luftrohr über eine äußere Oberfläche des ersten Luftrohrs eingepasst wird - ragt jeder der Vorsprünge durch eine entsprechende in Umfangsrichtung beabstandete Öffnung. Wenn die Klemme angezogen wird, um das erste Luftrohr um das zweite Luftrohr herum sicher zu befestigen, rasten die Vorsprünge ein und üben einen Druck auf eine äußere Oberfläche der Kohlenwasserstofffalle aus und befestigen so die Falle sicher in dem ersten Luftrohr.

Ein Verfahren, eine Kohlenwasserstofffalle sicher in einem Luftansaugweg eines Verbrennungsmotors zu befestigen, besteht darin
(i) eine Kohlenwasserstofffalle in ein offenes Ende eines Auslasskanals eines Reinluftfilters einzuführen,
(ii) einen Einlass zu einer Reinluftleitung über das offene Ende zu platzieren, um die Kohlenwasserstofffalle in dem Auslasskanal einzuschließen und
(iii) eine Klemme sowohl über dem Auslasskanal als auch über den Einlass der Reinluftleitung zu befestigen, und zwar derart, dass die radial sich nach innen erstreckenden Vorsprünge, die auf einer inneren Oberfläche des Einlasses der Reinluftleitung ausgebildet sind, durch die Öffnungen passen, die in einer äußeren Wandung des Auslasskanals ausgebildet sind, und in eine äußere Oberfläche der Kohlenwasserstofffalle einrasten.

Um die Falle bedeutend einfacher in den Auslasskanal einzuführen, wird der Auslasskanal vorzugsweise auf eine Temperatur gebracht, die höher ist als die Temperatur der Falle. Bei Temperaturen oberhalb der Raumtemperatur dehnen sich die Maße des Auslasskanals, der vorzugsweise aus Kunststoff besteht, soweit, dass die Toleranz zwischen dem Auslasskanal und der Falle erhöht wird.

Diese und weitere Merkmale bevorzugter Ausführungsformen der Erfindung - zusätzlich zu den in den Ansprüchen dargelegten - werden ebenfalls in den Spezifikationen und/oder Zeichnungen offenbart, und jedes der einzelnen Merkmale kann in Ausführungsformen der Erfindung entweder einzeln oder in Form von Baugruppen von zwei oder mehreren Merkmalen realisiert werden und auf andere Anwendungsbereiche angewendet werden und können nützliche, separat schutzfähige Ausführungen bilden, für die ebenfalls Schutz beansprucht wird.

### KURZE BESCHREIBUNG DER ZEICHNUNGEN

Die Erfindung wird im Folgenden detaillierter mit Bezug zu erklärenden bevorzugten Ausführungsformen beschrieben, die in den begleitenden Zeichnungen gezeigt werden, in denen:

Abb. 1 eine Explosionszeichnung eines Sicherungssystems für eine Kohlenwasserstofffalle gemäß einer bevorzugten Ausführungsform zeigt.

Abb. 2 eine Querschnittsansicht eines komplett zusammengebauten Sicherungssystems zeigt.

Abb. 3 eine perspektivische Ansicht eines komplett zusammengebauten Sicherungssystems gemäß einer weiteren Ausführungsform zeigt.

### DETAILLIERTE BESCHREIBUNG DER BEVORZUGTEN AUSFÜHRUNGSFORMEN

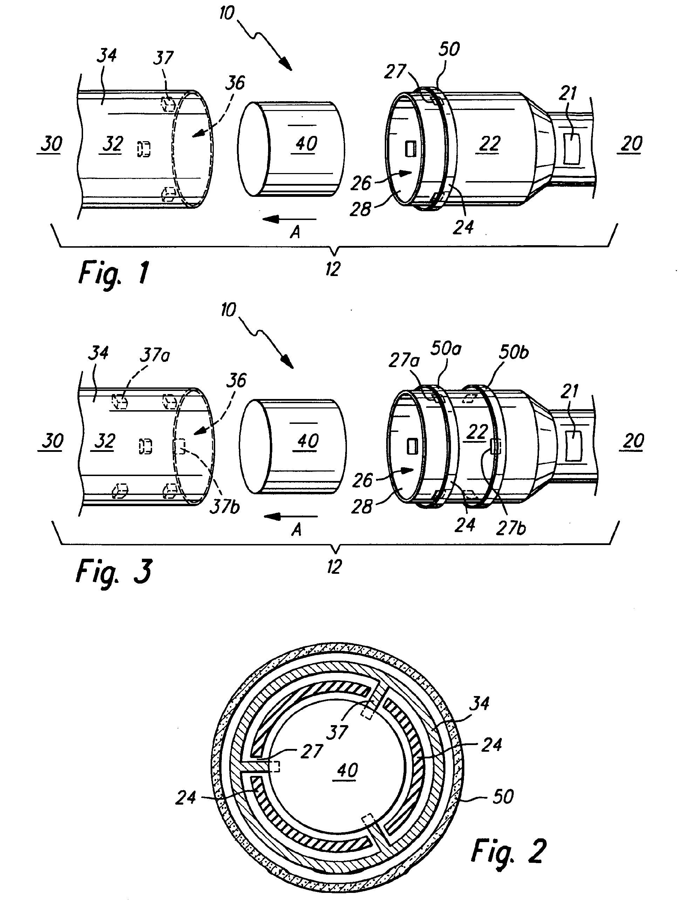

In Abbildung 1 beinhaltet eine perspektivische Explosionszeichnung eines Teils eines Luftansaugsystems 10 ein Sicherungssystem für eine Kohlenwasserstofffalle 12, das in der Nähe eines Kraftfahrzeugmotors (nicht abgebildet) eingebaut wird. Das Luftansaugsystem hat die Funktion, den angesaugten Luftstrom zu filtern und dem Motor dosiert zuzuführen.

Das Luftansaugsystem beinhaltet einen Luftfilter 20 und eine Reinluftleitung 30. Der Luftfilter ist so mit der Reinluftleitung verbunden, dass die vom Luftfilter gereinigte Luft in den Motor durch die Reinluftleitung strömt. Die Richtung der durch das Luftansaugsystem strömenden Luft (von der Umgebung in den Motor) ist durch den Pfeil A dargestellt. Der Luftfilter 20 beinhaltet einen Luftfilterauslasskanal 22, der nachgeschaltet (motorseitig) angeordnet ist, und die Reinluftleitung 30 beinhaltet einen Einlass für die Reinluftleitung 32, der vorgeschaltet angeordnet ist. Das Luftansaugsystem 10 kann weiterhin einen Luftmassensensor 21 beinhalten. Der Luftmassensensor kann dem Luftfilter direkt im Luftstrom nachgeschaltet angeordnet sein.

Der Auslasskanal 22 des Luftfilters beinhaltet ein ringförmiges Teil 24, welches einen zentralen Hohlraum 26 begrenzt. Eine Vielzahl von in Umfangsrichtung beabstandeten Öffnungen 27 sind in dem ringförmigen Teil ausgebildet. Die Öffnungen erstrecken sich vollständig durch das ringförmige Teil. Wie in Abb. 1 gezeigt, sind drei Öffnungen gleichmäßig um das Teil beabstandet. Während drei Öffnungen gezeigt sind, kann eine größere Anzahl an Öffnungen (z. B. 4, 5, 6 oder mehr) vorgesehen werden. Die Vielzahl von Öffnungen kann entlang einer einzigen umlaufenden Linie (wie gezeigt) oder entlang mehrerer umlaufender Linien, wie unten beschrieben, vorgesehen werden.

In der gezeigten und bevorzugten Ausführungsform hat jede der Öffnungen in dem ringförmigen Teil vorzugsweise eine im Wesentlichen rechteckige Form, die durch das Längenmaß, 1, und dem Breitenmaß, w, definiert wird, wobei 1>w. In Abb. 1 ist das Längenmaß jeder Öffnung in Umfangsrichtung mit Bezug auf das ringförmige Teil dargestellt. Alternativ kann das Längenmaß jeder Öffnung in axialer Richtung verlaufen, oder die Ausrichtung der Öffnungen kann variabel sein (z. B. kann eine Öffnung eine Ausrichtung haben, die sich von einer angrenzenden Öffnung unterscheidet). Bevorzugte rechteckige Öffnungen haben eine Länge zwischen ungefähr 9 bis 11 mm und eine Breite zwischen ungefähr 7 bis 9 mm, obwohl kleinere als auch größere Maße denkbar sind. Die Öffnungen können auch andere Formen haben, wie zum Beispiel im Wesentlichen quadratisch oder rund. So können sowohl die Anzahl und der Abstand als auch das Maß, die Ausrichtung und die Form der Öffnungen variieren.

In einer zusammengebauten Konfiguration ist eine Kohlenwasserstofffalle 40 in einem zentralen Hohlraum 26 des Auslasskanals angeordnet. Die Falle 40 kann in den Auslasskanal 22 über das offene Ende 28 eingeführt werden.

Die Kohlenwasserstofffalle 40 beinhaltet vorzugsweise ein Metallsubstrat (z. B. einen porösen Metallmonolithen), auf den mindestens ein Kohlenwasserstoff adsorbierendes Material aufgetragen ist. Das Kohlenwasserstoff adsorbierende Material kann Kohle, Aktivkohle, Zeolithen oder eine Mischung daraus beinhalten und es kann auf das Substrat mit bekannten Methoden aufgetragen werden wie zum Beispiel Waschbeschichtung, Tauchbeschichtung, Elektrobeschichtung und Sprühbeschichtung.

Damit die Kohlenwasserstofffalle in das ringförmige Teil hineinpasst, muss der Innendurchmesser des ringförmigen Teil etwas größer sein als der Außendurchmesser der Kohlenwasserstofffalle. Der lichte Abstand zwischen der Falle und dem ringförmigen Teil beträgt vorzugsweise ungefähr 1 mm oder weniger (z. B. ungefähr 0,5 oder 0,75 mm), wodurch ein ziemlich enger lichter Abstand entsteht.

Wegen des engen lichten Abstandes wird die Falle in einer bevorzugten Ausführungsform in den Auslasskanal eingeführt, wenn die Temperatur des Auslasskanals größer als die Temperatur der Falle ist. Durch Aufheizen des Auslasskanals, der aus Kunststoff hergestellt ist, dehnt sich der Auslasskanal leicht aus und die Falle kann bedeutend einfacher eingeführt werden. Während des Einführens kann die Kohlenwasserstofffalle zum Beispiel Raumtemperatur haben, während der aus Kunsttoff bestehende Auslasskanal eine Temperatur haben kann, die höher als die Raumtemperatur ist.

Der aus Kunststoff bestehende Auslasskanal ist vorzugsweise ein Kunststoffteil, das mittels Spritzguss hergestellt werden kann. Beim Spritzguss wird flüssiges Kunststoffmaterial in eine geformte Gussform gespritzt, der flüssige Kunststoff kühlt ab, um so ein festes Teil zu bilden, das aus der Gussform entnommen wird, danach kühlt es weiter ab und optional kann eine Endbearbeitung folgen (Polieren, Abgraten usw.). Vorzugsweise kann die Falle in den Auslasskanal während des letzten Abkühlens eingeführt werden.

Der Auslasskanal und die Vielzahl der darin ausgebildeten Öffnungen werden vorzugsweise gleichzeitig angefertigt, wenn der Auslasskanal mittels Spritzguss hergestellt wird. Alternativ kann die Vielzahl von Öffnungen während der dem Spritzguss folgenden Schritte, wie zum Beispiel Abgraten oder Bohren, ausgebildet werden.

Immer noch in Abb. 1 ist der Einlass der Reinluftleitung 32 so ausgelegt, dass er über die äußere Oberfläche des Auslasskanals geschoben werden kann, um so einen Luftdurchlass vom Luftfilter 20 zur Reinluftleitung 30 zu bilden. Gemäß einer bevorzugten Ausführungsform ist die Reinluftleitungseinheit inklusive Einlass der Reinluftleitung aus Gummi hergestellt. So wird die Kohlenwasserstofffalle im Auslasskanal des Luftfilters eingeschlossen und dem Luftfilter nachgeschaltet und der Reinluftleitung vorgeschaltet.

Der Einlass der Reinluftleitung beinhaltet ein ringförmiges Teil 34, welches einen zentralen Hohlraum 36 begrenzt, der so ausgelegt ist, dass er über eine äußere Oberfläche des Auslasskanals passt. Um eine enge Dichtung zwischen dem Einlass der Reinluftleitung und dem Auslasskanal des Luftfilters zu erhalten, beträgt der lichte Abstand zwischen den beiden Teilen vorzugsweise ungefähr 1 mm oder weniger (z. B. ungefähr 0,5 oder 0,75 mm). Damit also der Einlass der Reinluftleitung über die äußere Oberfläche des ringförmigen Teils passen kann, ist der Innendurchmesser des Einlasses der Reinluftleitung vorzugsweise etwas größer als der Außendurchmesser des ringförmigen Teils 24. Da der Einlass der Reinluftleitung vorzugsweise aus Gummi hergestellt ist, kann der Einlass der Reinluftleitung mit einer Übergangspassung über die äußere Oberfläche des ringförmigen Teils eingepasst werden.

Auf einer inneren Oberfläche des Einlasses der Reinluftleitung sind eine Vielzahl in Umfangsrichtung beabstandeter und radial sich erstreckender Vorsprünge 37 ausgebildet. Wie in Abb. 1 gezeigt, sind drei Vorsprünge 37 gleichmäßig um die innere Oberfläche des Einlasses der Reinluftleitung beabstandet. Während drei Vorsprünge gezeigt sind, kann eine größere Anzahl (z. B. 4, 5, 6 oder mehr) ausgebildet werden. Der Einlass der Reinluftleitung und die Vorsprünge werden vorzugsweise aus einem Stück hergestellt (z. B. mittels Spritzguss). Die Anzahl der Vorsprünge ist vorzugsweise gleich wie die Anzahl der Öffnungen, kann aber auch geringer sein.

Bevorzugte Vorsprünge haben die ungefähre Form eines rechteckigen Prismas, das durch ein Höhenmaß, h, ein Längenmaß, 1, und ein Breitenmaß, w, definiert wird, so dass 1>w. Die Höhe h wird definiert als die maximale axiale Distanz, die ein Vorsprung sich nach innen von der inneren Oberfläche des Einlasses der Reinluftleitung erstrecken kann. Die Vorsprünge können aber auch andere Formen haben, wie zum Beispiel trapezoid, oder wie ein quadratisches oder ringförmiges Prisma. Bevorzugte Vorsprünge haben eine Länge zwischen ungefähr 7 bis 9 mm und eine Breite zwischen ungefähr 5 bis 7 mm, obwohl auch kleinere und größere Ausmaße möglich sind.

Der Einlass der Reinluftleitung ist so ausgelegt, dass er über eine äußere Oberfläche des Auslasskanals geschoben werden kann, so dass jeder auf der inneren Oberfläche des Einlasses der Reinluftleitung ausgebildete Vorsprung mit der jeweiligen Öffnung, die im ringförmigen Teil ausgebildet ist, fluchtet und sich durch sie erstreckt. Die Vorsprünge sind so bemaßt, dass sie vollständig durch die Öffnungen passen und sich über einen begrenzten Abstand (Interferenzabstand) über die innere Oberfläche des zentralen Hohlraums 26 hinaus erstrecken. Ein bevorzugter Interferenzabstand beträgt ungefähr 2 mm. Das bedeutet, dass beim Fehlen einer Kohlenwasserstofffalle in dem zentralen Hohlraum jeder Vorsprung sich ungefähr 2 mm über die innere Oberfläche des ringförmigen Teils 24 hinaus erstreckt. Der Interferenzabstand kann kleiner als 2 mm (z. B. 1,5 mm) oder größer als 2 mm (z. B. 2,5 oder 3 mm) sein.

In einer zusammengebauten Konfiguration, die eine Kohlenwasserstofffalle in dem zentralen Hohlraum eines ringförmigen Teils beinhaltet, rasten die Vorsprünge in eine äußere Oberfläche der Kohlenwasserstofffalle ein. Vorzugsweise rastet eine axiale distale Stirnfläche jedes Vorsprunges in die äußere Oberfläche der Kohlenwasserstofffalle ein. Die Klemme 50 kann über den Öffnungen 27 angepasst (d. h. sowohl um den Einlass der Reinluftleitung als auch um den Auslasskanal herum) und fest angezogen werden, um die Vorsprünge 27 weiter gegen die äußere Oberfläche der Kohlenwasserstofffalle 40 zu drücken (d. h. zusammenzudrücken) und somit die Falle in dem zentralen Hohlraum 26 des Auslasskanals 22 zu sichern. Eine bevorzugte Klemme 50 ist eine nicht entfernbare Klemme. Eine derartige Klemme ist nicht als ein vom Benutzer zu reparierendes Teil ausgebildet und ist vorgesehen, über die gesamte Lebensdauer des Fahrzeugs eingespannt zu bleiben.

In einer zusammengebauten Konfiguration ist jeder Vorsprung vorzugsweise in einem Zustand axialer Druckbeanspruchung (d. h. zusammengedrückt entlang der Höhenrichtung). Eine Querschnittsansicht eines zusammengebauten Sicherungssystems gemäß einer Ausführungsform ist in Abb. 2 gezeigt. Das Ausmaß, wie weit die Vorsprünge zusammengedrückt werden (wegen der eingeführten Falle) wird durch gestrichelte Linien dargestellt. Die um die Peripherie der Kohlenwasserstofffalle ausgeübte Druckbeanspruchung sichert die Falle in dem ringförmigen Teil während des Betriebs des Kraftfahrzeugs, und dies insbesondere bei höheren Temperaturen.

In einer bevorzugten Ausführungsform regeneriert die Kohlenwasserstofffalle sich selbst. Während des Betriebs adsorbiert die Kohlenwasserstofffalle durch den Motor freigegebene Kohlenwasserstoffdämpfe, wenn der Motor nicht läuft und desorbiert diese Kohlenwasserstoffdämpfe, wenn der Motor läuft. Die Desorption von adsorbierten Kohlenwasserstoffdämpfen geschieht wegen der moderaten bis hohen Durchströmrate von reiner Luft, die durch die Falle gesaugt wird, wenn der Motor läuft. Desorbierte Kohlenwasserstoffdämpfe strömen durch die Reinluftleitung und in den Motor, wo sie verbrannt werden. Wenn also die Kohlenwasserstofffalle in dem Luftansaugsystem eingebaut wird, bleibt die Falle über die gesamte Lebensdauer des Fahrzeugs wirksam.

Gemäß eines bevorzugten Verfahrens für den Zusammenbau des Sicherungssystems wird eine Kohlenwasserstofffalle in das offene Ende eines Auslasskanals eines Luftfilters eingeführt, ein Einlass der Reinluftleitung wird über das offene Ende des Auslasskanals geschoben, um so die darin befindliche Kohlenwasserstofffalle zu umschließen, und eine nicht entfernbare Klemme sichert sowohl den Auslasskanal als auch den Einlass der Reinluftleitung. Durch das Sichern der Klemme gehen sich radial erstreckende Vorsprünge an der inneren Oberfläche des Einlasses der Reinluftleitung durch Öffnungen, die im Auslasskanal ausgebildet sind, und die an der äußeren Oberfläche der Kohlenwasserstofffalle einrasten und somit die Falle im Auslasskanal sichern.

Abb. 3 zeigt ein Sicherungssystem für eine Kohlenwasserstofffalle gemäß einer weiteren Ausführungsform. Zwei Klemmen 50a und 50b sind in dem in Abb. 3 gezeigten System vorhanden. Jede Klemme ist über eine Vielzahl von in Umfangsrichtung beabstandeten paarweise angeordneten Vorsprüngen und Öffnungen so gesichert, dass eine erste Reihe von Vorsprüngen 37a durch eine erste Reihe von Öffnungen 27a hindurchführt und die Kohlenwasserstofffalle an einer ersten Gruppe von Positionen um ihre äußere Oberfläche einrasten lässt, und dass eine zweite Reihe von Vorsprüngen 37b durch eine zweite Reihe von Öffnungen 27b hindurchführt und die Kohlenwasserstofffalle an einer zweiten Gruppe von Positionen um ihre äußere Oberfläche einrasten lässt. Die ersten und zweiten Öffnungsreihen sind versetzt zueinander dargestellt. Durch die Ausstattung mit einem zweiten Paar von Vorsprüngen und Öffnungen kann die Kohlenwasserstofffalle wirksam und stabil in dem Auslasskanal des Luftfilters während des Motorbetriebs gesichert werden.

Während der Auslasskanal des Luftfilters, der Einlass der Reinluftleitung und die Kohlenwasserstofffalle hier so beschrieben sind, dass sie einen kreisrunden Querschnitt beinhalten, ist es selbstverständlich, dass nicht kreisrunde (z. B. elliptische oder polygonale) Querschnitte verwendet werden können.

Die vorangehende Beschreibung und die Beispiele wurden lediglich dargelegt, um die Erfindung zu erläutern und sind nicht vorgesehen, einschränkend zu sein. Da Änderungen an den offenbarten Ausführungsformen, die den Geist und die Substanz der Erfindung einbeziehen, von Fachleuten vorgenommen werden können, sollte die Erfindung weit ausgelegt werden, um sämtliche Variationen einzubeziehen, die sich auf den Anwendungsbereich der beigefügten Ansprüche und deren Entsprechung beziehen.

## Patentansprüche

1. Sicherungssystem, für eine Kohlenwasserstofffalle in einem Luftansaugweg eines Verbrennungsmotor, wobei das System beinhaltet:
ein erstes Luftrohr, ausgelegt, um darin eine Kohlenwasserstofffalle aufzunehmen;
ein zweites Luftrohr, geeignet, über eine äußere Oberfläche des ersten Luftrohrs geschoben zu werden und drot einzurasten; und
eine Klemme, geeignet, sowohl um das erste Luftrohr als auch um das zweite Luftrohr befestigt zu werden und das erste Luftrohr an dem zweiten Luftrohr zu befestigen, **dadurch gekennzeichnet, dass**
eine Außenwand des ersten Luftrohrs eine Vielzahl in Umfangsrichtung beabstandete Öffnungen beinhaltet, und
das zweite Luftrohr eine Vielzahl sich radial erstreckender, in Umfangsrichtung beabstandeter Vorsprünge beinhaltet, die an einer inneren Oberfläche ausgeildet sind, wobei jeder dieser Vorsprünge geeignet ist, sich durch jeweils eine der in Umfangsrichtung beabstandeten Öffnungen zu erstrecken und an einer äußeren Oberfläche einer Kohlenwasserstofffalle einzurasten, die sich im ersten Luftrohr befindet, wenn das erste und zweite Luftrohr zusammen durch eine Klemme gesichert sind.

2. Sicherungssystem nach Anspruch 1, **dadurch gekennzeichnet, dass** das erste Luftrohr ein zu einem Luftfilter führender Auslasskanal ist.

3. Sicherungssystem nach Anspruch 1, **dadurch gekennzeichnet, dass** das zweite Luftrohr einen Einlassteil eines Reinluftleitungssystems beinhaltet.

4. Sicherungssystem nach Anspruch 1, **dadurch gekennzeichnet, dass** die Kohlenwasserstofffalle ein Metallsubstrat beinhaltet.

5. Sicherungssystem nach Anspruch 1, **dadurch gekennzeichnet, dass** das zweite Luftrohr und die Vorsprünge ein einheitliches Teil beinhalten.

6. Sicherungssytem nach Anspruch 1, **dadurch gekennzeichnet, dass** die Klemme eine nicht entfernbare Klemme ist und/oder die Klemme über den Vorsprüngen ausgerichtet ist.

7. Sicherungssytem nach Anspruch 1, **dadurch gekennzeichnet, dass** der nicht mit einer Klemme versehene lichte Abstand zwischen einer äußeren umlaufenden Oberfläche des ersten Luftrohrs und einer inneren Oberfläche des zweiten Luftrohrs ungefähr 1 mm oder weniger beträgt.

8. Verfahren zum sicheren Befestigen einer Kohlenwasserstofffalle in einem Luftansaugweg eines Verbrennungsmotors, wobei das Verfahren folgende Schritte beinhaltet:
Einführen einer Kohlenwasserstofffalle in ein offenes Ende eines Auslasskanals eines Luftfilters;
Aufsetzen eines Einlasses einer Reinluftleitung über das offene Ende, um die Kohlenwasserstofffalle innerhalb des Auslasskanals einzuschließen; und
Befestigen einer Klemme sowohl über dem Auslasskanal als auch über dem Einlass der Reinluftleitung; **dadurch gekennzeichnet, dass** während des Befestigens sich radial erstreckende Vorsprünge, die auf einer inneren Oberfläche des Einlasses der Reinluftleitung ausgebildet sind, auf einer äußeren Oberfläche der Kohlenwasserstofffalle einrasten.

9. Verfahren nach Anspruch 8, **dadurch gekennzeichnet, dass** während des Einführprozesses die Temperatur des Auslasskanals höher als die Temperatur der Kohlenwasserstofffalle ist.

10. Verfahren nach Anspruch 8, **dadurch gekennzeichnet, dass** jeder Vorsprung durch den physischen Kontakt mit der äußeren Oberfläche der Kohlenwasserstofffalle zusammengedrückt wird, wenn die Klemme befestigt wird.

11. Luftansaugsystem eines Verbrennungsmotors, beinhaltend das Sicherungssystem nach Anspruch 1, wobei das Sicherungssystem zwischen dem Luftfilter und dem Motor angebracht ist.
